# EUROPEAN PATENT SPECIFICATION

(11) **EP 1 699 887 B1**
(45) Date of publication and mention of the grant of the patent: **26.11.2008**
(21) Application number: 04814594.0
(22) Date of filing: 16.12.2004
(51) Int. Cl.: C09D 11/00

(54) **PIGMENTED INKS FORMED USING MICROFILTRATION**
UNTER MIKROFILTRATION HERGESTELLTE PIGMENTIERTE TINTEN
ENCRES PIGMENTEES FORMEES PAR MICROFILTRATION

(30) Priority: 30.12.2003 US 748888
(43) Date of publication of application: 13.09.2006
(73) Proprietor: Eastman Kodak Company, Rochester NY 14650-2201 (US)
(72) Inventor: ALLEN, Delaina, Annette, Rochester, New York 14620 (US); WHITLOCK, Lee, Ronald, Pittsford, NY 14534 (US)
(74) Representative: Haile, Helen Cynthia
(86) International application number: PCT/US2004/042435
(87) International publication number: WO 2005/066291

(56) References cited:
- EP-A- 1 022 267
- US-B1- 6 321 915

## Description

### FIELD OF THE INVENTION

This invention relates to a pigment-based ink composition for inkjet printing that exhibits stable and reliable jettability over an extended period of time.

### BACKGROUND OF THE INVENTION

Inkjet printing is a non-impact method for producing images by the deposition of ink droplets in a pixel-by-pixel manner to an image-recording element in response to digital signals. There are various methods that may be utilized to control the deposition of ink droplets on the image-recording element to yield the desired printed image. In one process, known as continuous inkjet, a continuous stream of droplets is charged and deflected in an imagewise manner onto the surface of the image-recording element, while unimaged droplets are caught and returned to an ink sump. In another process, known as drop-on-demand inkjet, individual ink droplets are projected as needed onto the image-recording element to form the desired printed image. Common methods of controlling the projection of ink droplets in drop-on-demand printing include piezoelectric transducers and thermal bubble formation. Inkjet printers have found broad applications across markets ranging from industrial labeling to short run printing to desktop document and pictorial imaging.

The inks used in the various inkjet printers can be classified as either pigment-based or dye-based. A pigment is a colorant that is insoluble in the carrier medium, but is dispersed or suspended in the form of small particles, often stabilized against flocculation and settling by the use of dispersing agents. A dye is a colorant that is molecularly dispersed or dissolved in the carrier medium. In either case, the carrier medium can be a liquid or a solid at room temperature. Commonly used carrier media are aqueous-based and include water as the major constituent, water-miscible humectants, water-miscible organic co-solvents and surfactants.

Pigment-based inks are often preferred over dye-based inks because they render printed images having higher optical densities and better resistance to light and ozone as compared to printed images made with dye-based inks. In pigment-based inks, the colorant exists as discrete particles, typically in the submicron range. These pigment particles are usually treated with addenda known as dispersants or stabilizers that serve to keep the pigment particles stabilized. These dispersants may be either chemically or physically attached to the surface of the pigment particles. However, pigment-based inks have their own set of deficiencies that tends to arise from the propensity of the pigment particles to settle, agglomerate or flocculate out over-time either in the bulk ink, the ink cartridge or in the printhead prior to ejection.

It is well known in the art of inkjet printing that stable and/or reliable jettability is difficult to obtain with pigment-based inks. Stable jettability occurs when the individual streams of ink droplets fire consistently from each of the printhead nozzles, i.e., with the same jet velocities, direction, drop sizes, separation length between droplets, etc., and without any stray or errant jetting. Reliable jettability occurs when the individual streams of ink droplets fire continuously from each of the printhead nozzles without any nozzles shutting down either temporarily or permanently.

Stable and reliable jettability can be adversely impacted by the presence of a broad distribution of particles in the ink, particularly those of large particle size, often present as contaminants in the ink. For this reason some prefiltration of the ink is typically performed with a filter pore size of 1 micron or greater to remove these large foreign particulates. However, filtration of pigment-based inks is not known to be performed in the submicron particle size range. This is due in part to deficiencies in micro-filtration techniques for inks as well as because of the relatively large size of the typical commercially available pigment particles.

US 5,679,138 describes preparation of nanoparticulate dispersions and inks made from organic pigments that have a mean particle size for 90% by weight of the pigment particles less than 100 nm. This work demonstrates the preparation of pigment particles in the nanoparticle size range, but does not address the jetting performance or overall filtration of these inks.

U.S. 6,494,943 B1 describes inkjet inks containing colored pigments having one or more desired parameters including a filterability such that when in a liquid medium, 100 mL having 10% solids of the colored pigment dispersion filters through a 3 µm nylon absolute filter. The problem with such inkjet pigment inks is that they cannot be jetted stably or reliably through most common inkjet printheads over extended periods of time.

U.S. 6,562,117 B2 describes a process for producing a pigment dispersion wherein the pigment is subjected to crossflow membrane filtration to produce an ink with a regulated average particle size. The problem with such dispersions is that they still have pigment particles of size greater than 100 nm which do not lead to high performance inkjet inks that can be jetted stably and reliably over long periods of time.

U.S. 6,321,915 B1 describes filter media structure which is capable of operating in the micro- and nanofiltration regime, which may be used to remove fibers and unwanted particles from printing ink. EP 1 022 267 A describes a process for the manufacture of diazonium compounds with a low sodium ions content wherein a semipermeable membrane is employed to desalt an aqueous suspension containing an organic diazonium compound, and discloses that the desalted suspension may be used to prepare azo compounds that may be used for inkjet printing.

### PROBLEM TO BE SOLVED BY THE INVENTION

There is a need to provide a pigment-based inkjet ink that jets stably and reliably over an extended period of time and that provides a narrow particle size distribution of pigment particles that is free from pigment or other particles larger than 0.5 micron.

### SUMMARY OF THE INVENTION

The present invention provides a pigment-based ink composition for inkjet printing the ink composition comprising pigment particles, wherein said ink composition has been filtered through a 0.45 µm or smaller pore size depth filter to provide a filterability of at least 80% wherein filterability is determined by the following test; a sample of said pigment-based ink is divided into four 100 ml aliquots and a first aliquot is filtered through a chemically inert membrane having a porosity of 1.0 µm and a diameter of 47 mm and using a vacuum of 65 kPa (20 inches of Hg) and measuring the time it takes to complete the filtration, T1, a second and third aliquot are sequentially passed through the same filter under the same filtering conditions, the fourth aliquot is then passed through the same filter under the same conditions while measuring the time it takes to complete the filtration of the fourth aliquot, T4, the time of T1 is divided by T4 and multiplied by 100 to obtain the filterability.

### ADVANTAGEOUS EFFECT OF THE INVENTION

The invention provides a pigment-based ink that exhibits stable and reliable jettability when fired using an inkjet printhead over an extended period. Print images made with the ink of the invention exhibit enhanced optical density, differential gloss, decreased banding and improved image quality.

### DETAILED DESCRIPTION OF THE INVENTION

The invention provides a pigment-based ink having numerous advantages. The invention provides a pigment-based ink that exhibits stable and reliable jettability when fired using an inkjet printhead over an extended period. When jetted using an inkjet printhead, the ink of the invention provides individual streams of ink droplets that fire consistently from each of printhead nozzles, i.e., with the same jet velocities, direction, drop sizes, separation length between droplets, etc., and without any stray or errant jetting. The invention also provides an ink in which the individual streams of ink droplets fire continuously from each of the printhead nozzles without any nozzles shutting down either temporarily or permanently. In addition, the invention provides an ink that aids extension of printhead lifetime and has good storage stability. Print images made with the ink of the invention exhibit enhanced optical density, differential gloss, decreased banding and improved image quality.

In order to meet the above described ink delivery performance requirements, improve image quality, and improve printer performance, the inventors of the present invention have unexpectedly discovered that it is desirable to provide a pigment ink composition that has a high filterability when passed through a one micron pore size membrane filter. A filterability of at least 80% is desirable wherein percent filterability is defined as the ratio of the time it takes the first aliquot of ink to pass through a one micron pore size test filter to the time it takes the fourth equal sized aliquot of ink to pass through the same test filter.

The test filter that was found to work best for this test was a one-micron chemically inert filter, 47 mm in diameter, (Nucleopore®, Whatman) made of a porous, polycarbonate film, penetrated with uniform cylindrical holes that produce a sieve-like filtering action. In order to perform this test, four aliquots of equal volume of ink, 100 ml each, were allowed to pass through the filter. The time it took each consecutive aliquot to pass through the filter under a constant vacuum of 65 kPa (20 inches of mercury) was recorded as T1, T2, T3, and T4. The ratio of the time it took the first aliquot to pass through the filter (T1) to the time it took the fourth and final aliquot (T4) to pass through the same filter is defmed as the filterability of the ink.

The invention provides an ink which can be prepared and then
a) tested to demonstrate the improved filterability and high throughput of the ink through a 1.0 micron test filter with a known surface area
b) loaded and printed in a testing fixture equipped with a piezo drop-on-demand printhead and shown to jet reliably at 7500 drops per second for ten or more hours of continuous jetting with no nozzle failures.
c) loaded and printed in a thermal drop-on demand printhead and shown to jet reliably for 600+ pages with no nozzle failures.

Filtration of the ink through a 0.45 micron pore size depth filter or smaller is required to provide the desired filterability. Preferably, the pore size of the depth filters is 0.2 micron or smaller. The mean pigment particle size of an ink exhibiting the desired filterability is 0.3 microns or smaller, preferably 0.100 microns or smaller. Pigment inks prepared with mean pigment particle sizes in the preferred range of 0.100 microns or less, fired continuously, and reliably for longer periods of time and contributed to longer printhead lifetimes.

For a good ink, the filterability was in the range of 80% to 100%. Such inventive inks would jet reliably and continuously in a piezo printhead for a minimum of 10 hours or at least 600 printed pages. The preferred range for the filterability was at least 90%. Inks prepared with filterability of 90 to 100 percent showed reliability of greater than 10 hours, most typically at least 48 hours of continuous jetting or more than 800 pages printed continuously with no nozzle failures.

The process of preparing inks from pigments commonly involves two steps: (a) a dispersing or milling step to break up the pigment to the primary particle, where the primary particle is defined as the smallest identifiable subdivision in a particulate system, and (b) a dilution step in which the dispersed pigment concentrate from step (a) is diluted with a carrier and other addenda to a working strength ink. In the milling step, the pigment is usually suspended in a carrier (typically the same carrier as that in the finished ink) along with rigid, inert milling media. Mechanical energy is supplied to this pigment concentrate, and the collisions between the milling media and the pigment cause the pigment to deaggregate into its primary particles. A dispersant or stabilizer, or both, may be added to the dispersed pigment concentrate to facilitate deaggregation, maintain particle stability, and retard particle reagglomeration and settling.

There are many different types of materials that may be used as milling media, such as glasses, ceramics, metals, and plastics. In a preferred embodiment, the grinding media can comprise particles, preferably substantially spherical in shape, e.g., beads, consisting essentially of a polymeric resin. In general, polymeric resins suitable for use as milling media are chemically and physically inert, substantially free of metals, solvent and monomers, and of sufficient hardness and firability to enable them to avoid being chipped or crushed during milling. Suitable polymeric resins include crosslinked polystyrenes, such as polystyrene crosslinked with divinylbenzene, styrene copolymers, polyacrylates such as poly(methyl methylacrylate), polycarbonates, polyacetals, such as Derlin^{™}, vinyl chloride polymers and copolymers, polyurethanes, polyamides, poly(tetrafluoroethylenes), e.g., Teflon®, and other fluoropolymers, high density polyethylenes, polypropylenes, cellulose ethers and esters such as cellulose acetate, poly(hydroxyethylmethacrylate), poly(hydroxyethylacrylate), silicone containing polymers such as polysiloxanes and the like. The polymer can be biodegradable. Exemplary biodegradable polymers include poly(lactides), poly(glycolids) copolymers of lactides and glycolide, polyanhydrides, poly(imino carbonates), poly(N-acylhydroxyproline) esters, poly(N-palmitoyl hydroxyprolino) esters, ethylene-vinyl acetate copolymers, poly(orthoesters), poly(caprolactones), and poly(phosphazenes). The polymeric resin can have a density from 0.9 to 3.0 g/cm³. Higher density resins are preferred inasmuch as it is believed that these provide more efficient particle size reduction. Most preferred are crosslinked or uncrosslinked polymeric media based on styrene.

Milling can take place in any suitable grinding mill. Suitable mills include an air jet mill, a roller mill, a ball mill, an attritor mill and a bead mill. A high-speed, high-energy, mill is preferred by which the milling media obtain velocities greater than 5 meters per second. In the present invention, a sawtooth impeller having a diameter of 40 mm when operated at 9,000 rpm (available from Morehouse-Cowles Hochmeyer) is used. The preferred proportion of milling media, pigment, carrier and optional dispersant can vary within wide limits and depends, for example, upon the particular pigment, the size and density of the milling media, and the particular printing application. For pigment-based inks of the invention, the pigment is present in the dispersed pigment concentrate at 1 to 50 wt.%, and the weight ratio of pigment to dispersant is 20:1 to 1:2. After milling is complete, the dispersed pigment concentrate is separated from the milling media by simple sieving or filtration.

The dispersant is an optional ingredient used to prepare the dispersed pigment concentrate. Preferred dispersants used in the present invention include sodium dodecyl sulfate, acrylic and styrene-acrylic copolymers, such as those disclosed in U. S. Pat. Nos. 5,085,698 and 5,172,133, and sulfonated polyesters and styrene's, such as those disclosed in U.S. Pat. No. 4,597,794. Other patents referred to above in connection with pigment availability also disclose a wide variety of dispersant to select from. The dispersant used in the examples is potassium N-methyl-N-oleoyl taurate. Dispersants may not be necessary if the pigment particles themselves are stable against flocculation and settling. Self-dispersing pigments are an example of pigments that do not require a dispersant; these types of pigments are well known in the art of inkjet printing.

The milling time can vary widely and depends upon the pigment, milling means and residence conditions selected, the initial and desired final particle size, etc. In the present invention, milling times typically range from 1 to 100 hours.

A wide variety of organic and inorganic pigments, alone or in combination, may be selected for use in the inks of the present invention. Pigments that may be used in the invention include those disclosed in, for example, U.S. Pat. Nos. 5,026,427; 5,086,698; 5,141,556; 5,160,370; and 5,169,436, the disclosures of which are incorporated herein by reference. The exact choice of pigments will depend upon the specific application and performance requirements such as color reproduction and image stability.

Pigments suitable for use in the present invention include, for example, azo pigments, monoazo pigments, disazo pigments, azo pigment lakes, β-Naphthol pigments, Naphthol AS pigments, benzimidazolone pigments, disazo condensation pigments, metal complex pigments, isoindolinone and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, diketopyrrolo pyrrole pigments, titanium oxide, iron oxide, and carbon black.

Typical examples of pigments that may be used include Color Index (C. I.) Pigment Yellow 1, 2, 3, 5, 6, 10, 12, 13, 14, 16, 17, 62, 65, 73, 74, 75, 81, 83, 87, 90, 93, 94, 95, 97, 98, 99, 100, 101, 104,106, 108, 109, 110, 111, 113, 114, 116, 117, 120, 121, 123, 124, 126, 127, 128, 129, 130, 133, 136, 138, 139, 147, 148, 150, 151, 152, 153, 154, 155, 165, 166, 167, 168, 169, 170, 171, 172, 173, 174, 175, 176, 177, 179, 180, 181, 182, 183, 184, 185, 187, 188, 190, 191, 192, 193, 194; C. I. Pigment Red 1, 2, 3, 4, 5, 6, 7, 8, 9, 10, 11, 12, 13, 14, 15, 16, 17, 18, 21, 22, 23, 31, 32, 38, 48:1, 48:2, 48:3, 48:4, 49:1, 49:2, 49:3, 50:1, 51, 52:1, 52:2, 53:1, 57:1, 60:1, 63:1, 66, 67, 68, 81, 95, 112, 114, 119, 122, 136, 144, 146, 147, 148, 149, 150, 151, 164, 166, 168, 169, 170, 171, 172, 175, 176, 177, 178, 179, 181, 184, 185, 187, 188, 190, 192, 194, 200, 202, 204, 206, 207, 210, 211, 212, 213, 214, 216, 220, 222, 237, 238, 239, 240, 242, 243, 245, 247, 248, 251, 252, 253, 254, 255, 256, 258, 261, 264; and C.I. Pigment Blue 1, 2, 9, 10, 14, 15:1, 15:2, 15:3, 15:4, 15:6, 15, 16, 18, 19, 24:1, 25, 56, 60, 61, 62, 63, 64, 66, and bridged aluminum phthalocyanine pigments. In a preferred embodiment of the invention, the pigment is C.I. Pigment Yellow 155, C.I. Pigment Yellow 128, C.I. Pigment Yellow 74, C.I. Pigment Red 122, C.I. Pigment Blue 15:3, or the siloxane-bridged aluminum phthalocyanine, bis(phthalocyanylalumino)tetraphenyl-disiloxane, represented by the following formula: 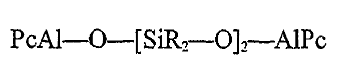 where R is a phenyl group and Pc is unsubstituted. The aforementioned pigments are preferred because they provide better color gamut for the printed images as compared to those that are not preferred.

Other colors that may be used in the inks of the present invention include black inks comprising black pigments such as C.I. Pigment Black 1, 7, 20, 31 or 32. A light cyan ink or a light magenta may also be used and are well known to those skilled in the art of inkjet printing. Such inks may contain the same or different pigments compared to those pigments used in the cyan or magenta inks, and the amount of pigment in the light inks is less than that in the cyan or magenta inks. For example, a cyan ink might contain Pigment Blue 15:3 at a concentration of 3 wt.%, and a light cyan might contain Pigment Blue 15:3 at a concentration of 0.5 wt.%.

Pigment-based inks useful in the present invention may include various other colorants. Examples include an orange ink comprising an orange pigment such as C.I. Pigment Orange 1, 2, 5, 6, 13, 15, 16, 17, 17:1, 19, 22, 24, 31, 34, 36, 38, 40, 43, 44, 46, 48, 49, 51, 59, 60, 61, 62, 64, 65, 66, 67, 68, 69; a green ink comprising a green pigment such as C.I. Pigment Green 1, 2, 4, 7, 8, 10, 36, 45; a violet ink comprising a violet pigment such as C.I. Pigment Violet 1, 2, 3, 5:1, 13, 19, 23, 25, 27, 29, 31, 32, 37, 39, 42, 44, 50; or a brown ink comprising a brown pigment such as C.I. Pigment Brown 1, 5, 22, 23, 25, 38, 41, 42.

The pigment used in element of the invention is present in the ink of the invention in any effective amount, generally from 0.1 to 10 wt.%. Preferably from 0.5 to 6 wt.% of the ink for effective jetting and good color density.

The water-dispersible polymers used in this invention are generally hydrophobic polymers of any composition that can be stabilized in a water-based medium. Such hydrophobic polymers are generally classified as either condensation polymer or addition polymers. Condensation polymers include, for example, polyesters, polyamides, polyurethanes, polyureas, polyethers, polycarbonates, polyacid anhydrides, and polymers comprising combinations of the above-mentioned types. Addition polymers are polymers formed from polymerization of vinyl-type monomers including, for example, allyl compounds, vinyl ethers, vinyl heterocyclic compounds, styrenes, olefins and halogenated olefins, ethylenically unsaturated carboxylic acids and esters derived from them, unsaturated nitriles, vinyl alcohols, acrylamides and methacrylamides, vinyl ketones, multifunctional monomers, or copolymers formed from various combinations of these monomers.

A first class of preferred water-dispersible polymers includes those styrene/acrylic polymers prepared by free-radical polymerization of vinyl monomers in aqueous emulsion. Suitable monomers for the styrene/acrylic polymers are well known in the art as disclosed, for example, in U.S. Patent 5,594,047, the disclosure of which is hereby incorporated by reference. In a preferred embodiment of the invention, the monomer for the styrene/acrylic polymer is an ester of acrylic acid, an ester of methacrylic acid, styrene or a styrene derivative.

For example, the monomer for the styrene/acrylic polymer may be formed from methyl methacrylate, ethyl methacrylate, butyl methacrylate, ethyl acrylate, butyl acrylate, hexyl acrylate, n-octyl acrylate, lauryl methacrylate, 2-ethylhexyl methacrylate, nonyl acrylate, benzyl methacrylate, 2-hydroxypropyl methacrylate, acrylonitrile, methacrylonitrile, vinyl acetate, vinyl propionate, vinylidene chloride, vinyl chloride, styrene, t-butyl styrene, vinyl toluene, butadiene, isoprene, N,N-dimethyl acrylamide, acrylic acid, methacrylic acid, chloromethacrylic acid, maleic acid, allylamine, N,N-diethylallylamine, vinyl sulfonamide, sodium acrylate, sodium methacrylate, ammonium acrylate, ammonium methacrylate, acrylamidopropane-triethylammonium chloride, methacrylamidopropane-triethylammonium chloride, vinyl-pyridine hydrochloride, sodium vinyl phosphonate and sodium 1-methylvinylphosphonate, sodium vinyl sulfonate, sodium 1-methylvinyl-sulfonate, sodium 2-acrylamido-2-methyl-1-propanesulfonate or sodium styrenesulfonate.

A second class of water-dispersible polymers which may be used in the invention include aqueous dispersible polyester ionomers. In a preferred embodiment, the polyester ionomers have the following general formula: 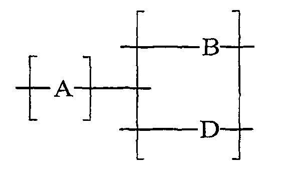 wherein:
A is the residue of one or more diol components which together comprise 100 mole % of recurring units and is represented by the following structure:

   -O-(CHR₂CHR₃O)ₘ-R₁-(OCHR₂CHR₃)ₙ-O-

   wherein:
   m and n independently represent an integer from 0-4; R₁ represents S, an alkylene group of 1 to about 16 carbon atoms; a cycloalkylene group of 5 to about 20 carbon atoms; a cyclobisalkylene group of about 8 to about 20 carbon atoms, a bi- or tri-cycloalkylene group of about 7 to about 16 carbon atoms, a bi- or tri-cyclobisalkylene group of about 9 to about 18 carbon atoms, an arenebisalkylene group of from 8 to about 20 carbon atoms or an arylene group of 6 to about 12 carbon atoms, a carbinol-terminated polydimethylsiloxane segment;
   and R₂ and R₃ each independently represents H, a substituted or unsubstituted alkyl group of about 1 to about 6 carbon atoms or a substituted or unsubstituted aryl group of about 6 to about 12 carbon atoms; B is the residue of a diacid component which comprises 8 to 50 mole % of recurring units and is represented by one or more of the following structures: 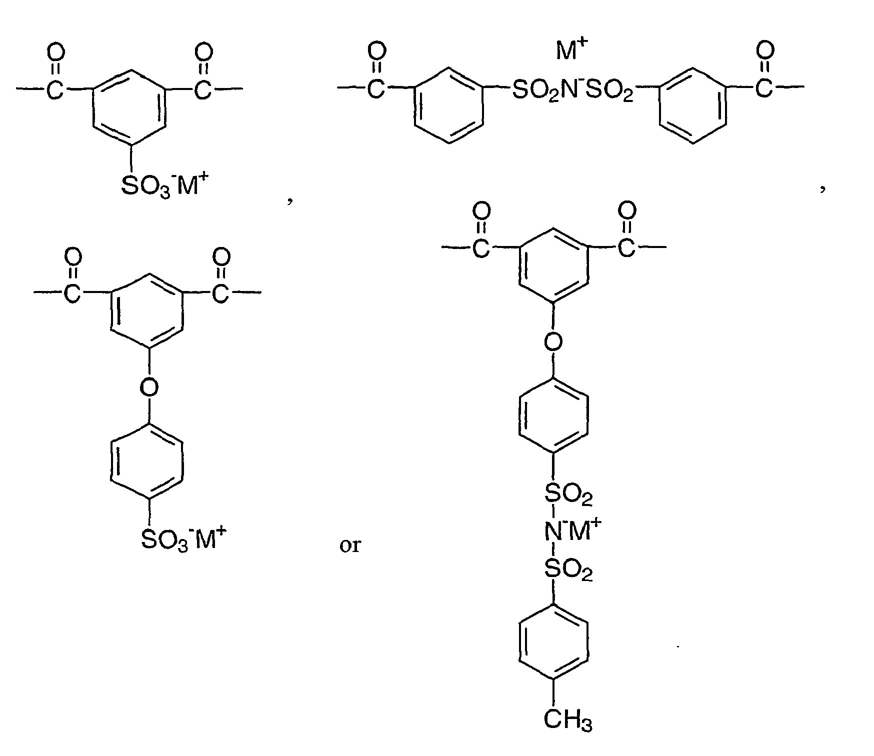 wherein:
   M⁺ represents alkali metals, such as Li, Na and K; ammonium groups such as ammonium, methylammonium, triethylammonium, tetralkylammonium, aryltrialkylammonium, etc.; phosphonium groups such as triphenylphosphonium; tetrabutylphosphonium; heteroaromatic ammonium groups such as pyridinium, imidazolium and N-methylammonium; sulfonium groups; guanidinium groups; amidinium groups, etc.; and D is the residue of a diacid component which
   comprises 50 to 92 mole % of recurring units and is represented by one or more of the following structures: 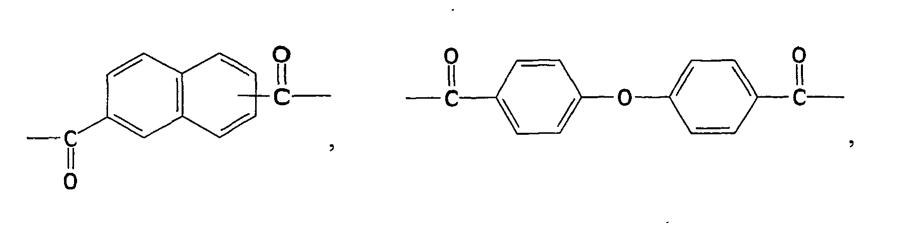 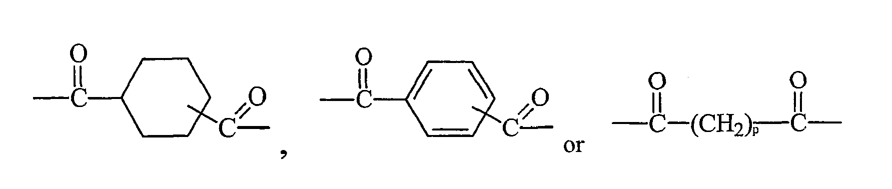
wherein p represents an integer from 2 to 12.

Some typical diols which A in the above formula represents include ethylene glycol, diethylene glycol, triethylene glycol, thiodiethanol, cyclohexanedimethanol, bisphenol A, trans-1,4-cyclohexanediol, dodecanediol, cis-exo-2,3-norbornanediol, 5-norbornene-2,2-dimethanol, hydroquinone bis(2-hydroxyethylether), carbinol terminated polydimethylsiloxane, MW=1000 (DMS-C15), (Gelest Inc.), etc.

Specific examples of water-dispersible polyesters useful in the invention include Eastman AQ® polyesters, (Eastman Chemical Company). Eastman Polyesters AQ 29, AQ 38, and AQ 55 are composed of varying amounts of isophthalic acid, sodium sulfoisophthalic acid, diethylene glycol, and 1,4-cyclohexanedimethanol. These thermoplastic, amorphous, ionic polyesters are prepared by a melt-phase condensation polymerization at high temperature and low pressure, and the molten product is extruded into small pellets. The solid polymer disperses readily in water at 70°C with minimal agitation to give translucent, low viscosity dispersions containing no added surfactants or solvents. Varying the amount of ionic monomers, i.e., sulfoisophthalic acid, can control the particle size. The particle sizes range from 0.02 to 0.1µm.

A third class of water-dispersible polymers which may be used in the invention include aqueous dispersible polyurethanes. Examples of useful polyurethanes are disclosed in U.S. Patent Application, Serial No.09/548,514, filed April 13, 2000, of Yacobucci et al., the disclosure of which is hereby incorporated by reference. These materials may be prepared as described in "Polyurethane Handbook," Hanser Publishers, Munich Vienna, 1985. Examples of aqueous dispersible polyurethanes are Witcobond® polyurethane dispersion by Witco Corp. and Sancure® polyurethane by BF Goodrich Company.

A fourth class of water-dispersible polymers which may be used in this invention include polyurethane-acrylic polymer alloys. Examples of useful polyurethane-acrylic polymer alloy dispersions are disclosed in U.S. Patent 5,173,526, the disclosure of which is hereby incorporated by reference. An example of this type of material is Witcobond A-100 by CK Witco Corporation, which is an alloyed aliphatic polyester based urethane and a polyacrylate.

The water-dispersible polymer is present in the invention Inkjet·ink generally from about 0.1 % to about 10% by weight of the ink. Preferably from about 0.5% to about 5% by weight for good print density, optimum durability and extended jetting time.

It has been observed that, in general, the addition of water-dispersible polymer particles in inks can be used to increase the gloss level of the receiver surface in the printed areas after the inks have being printed onto it. The amount of polymer used must be low enough such that the ink composition is jettable using an inkjet printhead. The necessary amount depends upon the particular polymer being used, as well as the identities and amounts of the other components in the ink composition.

Representative examples of water miscible humectants and water miscible organic co-solvents include (1) alcohols, such as methyl alcohol, ethyl alcohol, n-propyl alcohol, isopropyl alcohol, n-butyl alcohol, sec-butyl alcohol, t-butyl alcohol, iso-butyl alcohol, furfuryl alcohol, and tetrahydrofurfuryl alcohol; (2) ketones or ketoalcohols such as acetone, methyl ethyl ketone and diacetone alcohol; (3) ethers, such as tetrahydrofuran and dioxane; (4) esters, such as ethyl acetate, ethyl lactate, ethylene carbonate and propylene carbonate; (5) polyhydric alcohols, such as ethylene glycol, diethylene glycol, triethylene glycol, tetraethylene glycol, propylene glycol, polyethylene glycol, glycerol, 2-methyl-2,4-pentanediol, 1,2,6-hexanetriol, 2-ethyl-2-hydroxymethyl-1,3-propanediol, 1,5 pentanediol, 1,2-hexanediol, and thioglycol; (6) lower mono-alkyl ethers derived from alkylene glycols, such as the mono-methyl, mono-ethyl, mono-propyl and mono-butyl ethers of ethylene glycol, diethylene glycol, triethylene glycol, propylene glycol, and poly(ethylene glycol); (7) lower di-alkyl ethers derived from alkylene glycols, such as the di-methyl, di-ethyl, di-propyl and di-butyl ethers of ethylene glycol, diethylene glycol, triethylene glycol, propylene glycol, and poly(ethylene glycol); (8) nitrogen containing compounds, such as urea, 2-pyrrolidone, N-methyl-2-pyrrolidone, and 1,3-dimethyl-2-imidazolidinone; and (9) sulfur-containing compounds such as dimethyl sulfoxide, 2,2'-thiodiethanol, and tetramethylene sulfone.

In general it is desirable to make the pigmented inkjet ink in the form of a concentrated mill grind, which is subsequently diluted to the appropriate concentration for use in the inkjet printing system. This technique permits preparation of a greater quantity of pigmented ink from the equipment. If the mill grind was made in a solvent, it is diluted with water and optionally other solvents to the appropriate concentration. If it was made in water, it is diluted with either additional water or water-miscible solvents to the desired pigment concentration for the ink. By dilution, the ink is adjusted to the desired viscosity, color, hue, saturation density, and print area coverage for the particular application.

In the case of organic pigments, the ink may contain up to approximately 30% pigment by weight, but will generally be in the range of approximately 0.1 to 10%, preferably 0.1 to 5%, by weight of the total ink composition for most drop-on-demand printing applications. If an inorganic pigment is selected, the ink will tend to contain higher weight percentages of pigment than with comparable inks employing organic pigments, and may be as high as approximately 75% in some cases, since inorganic pigments generally have higher specific gravities than organic pigments.

Typically, the amount of aqueous carrier employed in the inks is in the range of approximately 70 to 99.9 wt.%, preferably approximately 90 to 99.9 wt.%, based on the total weight of the ink for an ink prepared for a thermal printhead. A mixture of water and a polyhydric alcohol, such as diethylene glycol, is useful as the aqueous carrier medium. In the case of a mixture of water and diethylene glycol, the aqueous carrier medium usually contains from about 30% water/70% diethylene glycol to about 95% water/5% diethylene glycol. Percentages are based on the total weight of the aqueous carrier medium. In a preferred embodiment, the inks contain from 5 to 60 wt.% of one or more water miscible humectants and/or water miscible organic co-solvents, based on the total weight of the ink. Preferred humectants for the inks of the invention include diethylene glycol, glycerol, diethylene glycol butyl ether, and mixtures thereof. Humectants may be used in an amount of from 5 to 60 wt.%, preferably in an amount of from 5 to 30 wt.%.

Jet velocity, separation length of the droplets, drop size and stream stability are greatly affected by the surface tension and the viscosity of the ink. Generally, pigmented inkjet inks suitable for use with inkjet printing systems should have a surface tension in the range of about 20 dynes/cm to about 60 dynes/cm and, more preferably in the e range of 30 dynes/cm to about 50 dynes/cm. Control of surface tensions in aqueous inks is accomplished by additions of small amounts of surfactants. The surfactants may be anionic, cationic, amphoteric or nonionic and used at levels of 0.01 to 2 wt.%. The level of surfactants to be used can be determined through simple trial and error experiments. Anionic and cationic surfactants may be selected from those disclosed in U.S. Pat. Nos. 5,324,349; 4,156,616 and 5,279,654 as well as many other surfactants known in the inkjet ink art. Commercial surfactants of interest include Surfynols® from Air Products, the Zonyls® from DuPont, the Silwets® from Witco and the Fluorads® from 3M. Preferred surfactants include Surfynol® 465 (Air Products and Chemicals, Inc.) and Silwet® L-77 (Witco Corp).

The ink has physical properties compatible with a wide range of ejecting conditions, i.e. drive voltages and pulse widths for thermal inkjet printing devices, driving frequencies of the piezo element for a drop-on-demand device. The ink is also compatible for a continuous inkjet printhead device. The ink must also be compatible with the shape and size of the nozzle as well as the nozzle plate material. Acceptable viscosities are no greater than 20 centipoise, and preferably in the range of about 1.0 to 10.0 centipoise at room temperature. Ideally, viscosities are in the range of 1.0 to 5.0 centipoise. In addition to acting as a viscosity modifier, one of the roles of the humectant is to prevent the ink from drying out in the nozzle orifice or on the nozzle plate.

A penetrant may also be added as an optional component in the ink to help the ink penetrate the receiving substrate, especially when the substrate is a highly sized paper. A biocide may be added to the inks employed in the invention to suppress the growth of microorganisms such as molds, fungi, etc. in aqueous inks. The addition of such components in the ink help to increase not only the stability and shelf-life of the ink, but also the reliability of its firing performance. A preferred biocide for the inks employed in the present invention is Proxel® GXL (Avecia Corp.) at a final concentration of 0.0001-0.5 wt.% and Kordex MLX (Rohm and Haas) in a similar concentration range of 0.01 - 0.5 wt%.

The pH of the inks employed in the invention may be adjusted by the addition of organic or inorganic acids or bases. Useful inks may have a preferred pH ranging from 2 to 10. Typical inorganic acids include hydrochloric, phosphoric and sulfuric acids. Typical organic acids include methanesulfonic, acetic and lactic acids, and succinic acid. Typical inorganic bases include alkali metal hydroxides and carbonates. Typical organic bases include ammonia, triethanolamine and tetramethylethylenediamine.

Other additives which may optionally be present in the inks of the invention include thickeners, conductivity enhancing agents, anti-kogation agents, drying agents, waterfast agents, dye solubilizers, chelating agents, binders, light stabilizers, viscosifiers, buffering agents, anti-mold agents, anti-curl agents, stabilizers, anti-corrosion agents and defoamers.

The inkjet inks provided by this invention are employed in inkjet printing wherein liquid ink drops are applied in a controlled fashion to an ink receptive layer substrate, by ejecting ink droplets from the plurality of nozzles, or orifices, in the inkjet printhead. Multiple printheads may also be used to deliver the ink to the substrate.

Commercially available inkjet printers use several different schemes to control the deposition of the ink droplets. Such schemes are generally of two types: continuous stream and drop-on-demand.

In drop-on-demand systems, a droplet of ink is ejected from an orifice directly to a position on the ink receptive layer by pressure created by, for example, a piezoelectric device, an acoustic device, or a thermal process controlled in accordance with digital data signals. An ink droplet is not generated and ejected though the orifices of the printhead unless it is needed. Inkjet printing methods, and related printers are commercially available and need not be described in detail.

Inkjet ink comprising three-, four-, five-, six-, and seven-color ink sets of pigments of the present invention can be used in any of the popular inkjet printing systems, including thermal or piezoelectric drop-on-demand printers and continuous inkjet printers. Of course, the specific ink formulations will vary depending upon the type of inkjet printing system.

The following examples are provided to illustrate the invention.

### EXAMPLE

### Preparation of Pigment Dispersions

### Cyan Pigment Dispersion

A mixture of 325 g of polymeric beads having mean diameter of 50 µm, 50.0 g of Pigment Blue 15:3 (Sun Chemical Corp.); 12.5 g of potassium oleoyl methyl taurate (KOMT); and 187.5 g of deionized water was prepared. These components were milled for 8 hours in a double-walled vessel at room temperature using a high-energy media mill manufactured by Morehouse-Cowles Hochmeyer.

The mixture was filtered through a 4-8 µm Buchner funnel to remove the polymeric beads, and the resulting filtrate diluted to give a Cyan Pigment Dispersion having a 10.0 wt% final concentration of pigment. Kordek 50 C biocide (Rohm and Haas) was added to the dispersion at an amount necessary to give a final concentration of 500 ppm. The median particle size of the pigment dispersion was 40 nm, as determined using a MICROTRAC II Ultrafine particle analyzer (UPA) manufactured by Leeds & Northrup.

### Magenta Pigment Dispersion

The Magenta Pigment Dispersion was prepared the same as the Cyan Pigment Dispersion except that Pigment Red 122 (Sun Chemical Corp.) was used instead of Pigment Blue 15:3 and 15.0 g of KOMT was used. The final concentration of pigment in the dispersion was 10.0 wt%, and the median particle size was 15 nm.

### Yellow Pigment Dispersion

The Yellow Pigment Dispersion was prepared the same as the Cyan Pigment Dispersion except that Pigment Yellow 155 (Clariant Corp.) was used instead of Pigment Blue 15:3. The final concentration of pigment in the dispersion was 10.0 wt%, and the median particle size was 10 nm.

### Black Pigment Dispersion

The Black Pigment Dispersion was prepared the same as the Cyan Pigment Dispersion except that 62.5 g of Pigment Black 7 (Cabot Corp.) was used instead of Pigment Blue 15:3 and 15.62 g of KOMT was used. The final concentration of pigment was 12.0 wt%, and the median particle size was 70 nm.

### Preparation of Ink Compositions

### Cyan Ink C-1 of the Invention

Cyan Ink C-1 was prepared using the Cyan Pigment Dispersion described above to give 1.7 wt% of pigment relative to the total weight of the ink. Other additives included diethylene glycol at 23 wt%, glycerol at 6 wt%, diethylene glycol butyl ether (Dowanol® DB from Dow Chemical Co.) at 2.5 wt%, Surfynol® 465 (Air Products and Chemicals, Inc.) at 0.2 wt %, and AQ 55, an amorphous sulfonated polyester available from Eastman Chemical, at 1.2 wt% relative to the total weight of the ink. Triethanolamine was present at 0.24 wt% and Succinic Acid was used at 0.12 wt%.

The ink was pre-filtered with a Pall 0.2 micron nylon filter assembly (catalogue number R1F010). The ink was then simultaneously degassed and filtered through a second Pall 0.2 micron filter assembly of the same type for the final filtration.

### Cyan Ink C-2 of the invention

Cyan Ink C-2 was the cyan pigmented ink available in the Epson ink cartridge T477 for the Epson Stylus Pro 9500 inkjet printer.

The ink was pre-filtered with a Pall 1.2 micron, cartridge filter assembly (catalogue number DFA4001J012P) followed by a Pall 0.2 micron Ultipor N66 disposable nylon filter assembly (DFA4001NAEY). The ink was then simultaneously degassed and filtered through an additional Pall 0.2 micron filter of the same type for the final filtration. The mean particle size of the ink was 0.0967 micron.

### Cyan Ink C-3 of the Invention

Cyan Ink C-3 was prepared in the same manner as C-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) in series with a 0.45 micron filter (catalogue number SLK700NXP) for the final filtration.

### Cyan Ink C-4 of the Invention

Cyan Ink C-4 was prepared in the same manner as C-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) in series with a Pall 0.2 micron Ultipor N66 disposable nylon filter assembly (DFA4001NAEY) for the final filtration.

### Cyan Ink C-5 of the Invention

Cyan Ink C-5 was prepared in the same manner as C-1. The ink was pre-filtered with a Pall 0.2 micron nylon filter assembly (catalogue number R1F010). The ink was then simultaneously degassed and filtered through a second Pall 0.2 micron filter assembly of the same type for the final filtration.

### Cyan Ink C-6 of the Invention

Cyan Ink C-6 was prepared in the same manner as C-1. The ink was pre-filtered with a Pall 1.0 micron filter (catalogue number YO10FS10). The ink was then simultaneously degassed and filtered through a Pall 0.2 micron Ultipor N66 disposable nylon filter assembly (DFA4001NAEY) for the final filtration.

### Magenta Ink M-1 of the Invention

Magenta Ink M-1 was prepared the same as Cyan ink C-1 except that the Magenta Pigment Dispersion was used at 2.72 wt% instead of the Cyan Pigment Dispersion, diethylene glycol was used at 18.4 wt%, and AQ 55 was used at 1.96 wt%.

The ink was pre-filtered with a Pall 0.2 micron nylon filter assembly (catalogue number R1F010). The ink was then simultaneously degassed and filtered through a 0.1 micron Pall Ultipor N66 filter assembly (MCY4463NIEYH1313) for the final filtration step.

### Magenta Ink M-2 of the Invention

Magenta Ink M-2 was prepared in the same manner as M-1. The ink was pre-filtered with a Pall 0.2 micron nylon filter assembly (catalogue number R1F010). The ink was then simultaneously degassed and filtered through a second Pall 0.2 micron filter assembly of the same type as part of the final filtration.

### Magenta Ink M-3 of the Invention

Magenta Ink M-3 was prepared in the same manner as M-1. The ink was pre-filtered with a Pall 1.0 micron filter (catalogue number Y010FS10). The ink was then simultaneously degassed and filtered with a Pall 0.2 micron nylon filter assembly (catalogue number R1F010) for the final filtration.

### Magenta Ink M-4 of the Invention

Magenta Ink M-4 was prepared in the same manner as M-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) in series with a Pall 0.2 micron Ultipor N66 disposable nylon filter assembly (DFA4001NAEY) for the final filtration.

### Magenta Ink M-5 of the Invention

Magenta Ink M-2 was prepared in the same manner as M-1. The ink was pre-filtered with a Pall 0.2 micron nylon filter assembly (catalogue number R1F010). The ink was then simultaneously degassed and filtered through a second Pall 0.2 micron filter assembly of the same type as part of the final filtration.

### Magenta Ink M-6 of the Invention

Magenta Ink M-6 was prepared in the same manner as M-1. The ink was pre-filtered with a Pall 1.0 micron filter (catalogue number 5EC4888389010). The ink was then simultaneously degassed and filtered through a Pall 0.2 micron Ultipor N66 disposable nylon filter assembly (DFA4001NAEY) for the final filtration.

### Magenta Ink M-7 of the Invention

Magenta Ink M-7 was prepared in the same manner as M-1. The ink was pre-filtered with a Pall 1.0 micron Profile II filter (catalogue number 5EC4888389010). The ink was then simultaneously degassed and filtered through a Pall 0.2 micron Ultipor N66 disposable nylon filter assembly (DFA4001NAEY) for the final filtration.

### Magenta Ink M-8 of the Invention

Magenta Ink M-7 was prepared in the same manner as M-1 except that diethylene glycol was used at 15 wt% and AQ 55 was used at 1.22 wt%.

The ink was pre-filtered with a Pall 1.0 micron Profile II filter (catalogue number 5EC4888389010). The ink was then simultaneously degassed and filtered through a Pall 0.2 micron Ultipor N66 disposable nylon filter assembly (DFA4001NAEY) for the final filtration.

### Yellow Ink Y-1 of the Invention

Yellow Ink Y-1 was prepared from the combination of four-Epson ink cartridges, T475 (for the Epson Stylus Pro 9500 printer). The ink was removed from the cartridges and pre-filtered with a Pall 1.2 micron, HDC II filter assembly, catalogue number DFA4001J012P. The ink was then simultaneously degassed and filtered through a final Pall 0.2 micron, Ultipor N66 disposable filter assembly (catalogue number DFA4001NAEY). The mean particle size of the ink was 0.0611 micron after filtration.

### Yellow Ink Y-2 of the Invention

Yellow Ink Y-2 was prepared the same as Magenta Ink M-1 except that the Yellow Pigment Dispersion was used at 2.18 wt% instead of the Magenta Pigment Dispersion and diethylene glycol was used at 20.0 wt%.

The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) in series with a Pall 0.2 micron Ultipor N66 disposable nylon filter assembly (DFA4001NAEY) for the final filtration.

### Yellow Ink Y-3 of the Invention

Yellow Ink Y-3 was prepared in the same manner as Y-2. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) in series with a Pall 0.2 micron Ultipor N66 disposable nylon filter assembly (DFA4001NAEY) for the final filtration.

### Yellow Ink Y-4 of the Invention

Yellow Ink Y-4 was prepared in the same manner as Y-2. The ink was pre-filtered with a Pall 1.0 micron filter (catalogue number Y010FS10). The ink was then simultaneously degassed and filtered through a Pall 0.2 micron Ultipor N66 disposable nylon filter assembly (DFA4001NAEY) for the final filtration.

### Yellow Ink Y-5 of the Invention

Yellow Ink Y-5 was prepared with 4.2 wt% of yellow dispersion. Diethylene glycol was present at 14.4 wt%, glycerol was used at 6.4 wt%, diethylene glycol butyl ether (Dowanol® DB from Dow Chemical Co.) at 2.5 wt%, and Surfynol® 465 (Air Products and Chemicals, Inc.) at 0.2 wt %.

The ink was pre-filtered with a Pall 1.0 micron Profile II filter (catalogue number 5EC4888389010). The ink was then simultaneously degassed and filtered with a 0.5 micron Profile II(catalogue number 5EC4888389005) followed by a 0.1 micron Ultipleat Profile GF Plus (Catalogue number PUY01AU001ZJ).

### Black Ink K-1 of the invention

Black Ink K-1 was prepared the same as the Cyan Ink C-1 except the Black Pigment Dispersion described above was used instead of the Cyan dispersion to give 1.65 wt% of pigment relative to the total weight of the ink, and AQ 55 was used at 1.49 wt%.

The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) in series with a Pall 0.2 micron Ultipor N66 disposable nylon filter assembly (DFA4001NAEY) for the final filtration.

### Black Ink K-2 of the invention

Black Ink K-2 was prepared in the same manner as ink K-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) in series with a Pall 0.2 micron Ultipor N66 disposable nylon filter assembly (DFA4001NAEY) for the final filtration.

### Black Ink K-3 of the invention

Black Ink K-3 was prepared in the same manner as ink K-1. The ink was pre-filtered with a Pall 0.2 micron nylon filter assembly (catalogue number R1F010). The ink was then simultaneously degassed and filtered through a second Pall 0.2 micron filter assembly of the same type for the final filtration.

### Black Ink K-4 of the invention

Black Ink K-4 was prepared in the same manner as ink K-1. The ink was pre-filtered with a Pall 0.2 micron nylon filter assembly (catalogue number R1F010). The ink was then recirculated through a 0.3 um Pall Profile II depth filter (catalogue number 5EC488389003) for two hours followed by filtration through a 0.1 um Ultipleat Profile GF Plus filter part #( PUY01AU001ZJ) for an additional two hours for the final filtration.

### Black Ink K-5 of the invention

Black Ink K-5 was prepared by combining multiple cartridges of Hewlett Packard hp inkjet print cartridge 45. The ink was pre-filtered with a Pall 0.2 micron nylon filter assembly (catalogue number R1F010). The ink was then simultaneously degassed and filtered through a second Pall 0.2 micron filter assembly of the same type for the final filtration.

### Comparative Cyan Ink CC-1

Comparative Cyan Ink CC-1 was a Cyan Ink from Epson, ink cartridge T477 for the Epson Stylus Pro 9500 printer, and was from the same ink lot as inventive ink C-2. The mean particle size was 0.112 micron. The ink was used as received unless otherwise noted.

### Comparative Cyan Ink CC-2

Comparative Cyan Ink CC-2 was prepared the same as inventive cyan ink C-1. The ink was pre-filtered with a Pall 1.0 micron filter catalogue number Y010FS10. The ink was then simultaneously degassed and filtered through a Pall 1.2 micron, cartridge filter assembly (catalogue number DFA4001J012P) for the final filtration.

### Comparative Cyan Ink CC-3

Comparative Cyan Ink CC-3 was prepared the same as inventive Cyan Ink C-1. The ink was pre-filtered with a Pall 1.0 micron filter (catalogue number Y010FS10). The ink was degassed per the normal procedure. No final filtration was performed.

### Comparative Cyan Ink CC-4

Comparative Cyan Ink CC-4 was prepared the same as inventive Cyan Ink C-1. The ink was degassed per the normal procedure. No final filtration was performed.

### Comparative Magenta Ink CM-1

Comparative Magenta Ink CM-1 was prepared the same as inventive Magenta Ink M-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) for the final filtration.

### Comparative Magenta Ink CM-2

Comparative Magenta Ink CM-2 was prepared the same as inventive Magenta Ink M-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) for the final filtration.

### Comparative Magenta Ink CM-3

Comparative Magenta Ink CM-3 was prepared the same as inventive Magenta Ink M-8. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) for the final filtration.

### Comparative Yellow Ink CY-1

Comparative Yellow Ink CY-1 was a Yellow Ink from Epson, ink cartridge T475 for the Epson Stylus Pro 9500 printer and was from the same ink lot as inventive ink Y-2. The mean particle size was 0.07 micron. The ink was used as received unless otherwise noted with no filtration.

### Comparative Yellow Ink CY-2

Comparative Yellow Ink CY-2 was prepared the same as inventive Yellow Ink Y-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) in series with a 0.45 micron filter (catalogue number SLK700NXP) for the final filtration.

### Comparative Yellow Ink CY-3

Comparative Yellow Ink CY-3 was prepared the same as inventive Yellow Ink Y-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) for the final filtration.

### Comparative Yellow Ink CY-4

Comparative Yellow Ink CY-4 was prepared the same as inventive Yellow Ink Y-1. The ink was pre-filtered with a Pall 1.0 micron filter (catalogue number Y010FS10). The ink was degassed per the normal procedure. No final filtration was performed.

### Comparative Black Ink CK-1

Comparative Black Ink CK-1 was prepared the same as inventive Black Ink K-1. The ink was pre-filtered with a Pall 1.0 micron filter (catalogue number Y010FS10). The ink was then simultaneously degassed and filtered through a Pall 1.2 micron, cartridge filter assembly (catalogue number DFA4001J012P) for the final filtration.

### Comparative Black Ink CK-2

Comparative Black Ink CK-2 was the same as inventive ink K-5. The ink was used as received unless otherwise noted with no filtration.

### Testing

### Evaluation of Jetting Reliability

With the exception of comparative inks CC-2 and CY-2, each of the inks described above was degassed prior to jetting out of an inkjet printhead. Removal of the soluble gases in the ink, primarily nitrogen and oxygen, was carried out by circulating the ink continuously through a Liqui-Cel® SuperPhobic® Membrane Contactor (G604 from Celgard Inc.) with an in-line filter as described in the previous section, until a dissolved oxygen level of 0.2 ppm or less was obtained. Typical filtration times to reach this oxygen content in the ink were at least two hours. The final filtration step for the inks included filters that ranged in size from 0.45 to 0.1 micron. The preferred range for improved reliability performance was 0.2 micron, and even better performance was obtained with a 0.1 micron filter. In some cases, two filters were used in series as part of the final filtration as noted above. Oxygen levels in the ink were measured on a Mettler-Toledo, 0₂ Transmitter, Model #4100, equipped with an in-line oxygen-sensing electrode Model 6100.

The jettability performance of each of the inks described above was then tested by jetting the ink using a 214-nozzle piezoelectric drop-on-demand printhead manufactured by Brother Industries, Ltd, removed from a multifunctional printer/fax machine (Product MFC 7400c). This printhead is a shear-mode type that records by imparting pressure produced by piezoelectric vibration, to the ink in the printhead to produce ink droplets (ejection orifice diameter: 25 micron; drive voltage 16.6 -18.6 volts; jetting frequency: 7.5 kHz). Comparative inks CC-1 and CY-1 were run directly from the ink cartridge they were received in. A successful test result occurred when 67 pL ink droplets of the ink composition were continuously fired through 15 nozzles of the printhead at a rate of 7,500 drops/second for at least 10 hours without nozzle failure or ink droplet misdirection. The test was considered complete after 48 hours of continuous firing or when the sample of ink ran out. Forty-eight hours of continuous testing represents one billion droplets fired from each nozzle under the conditions described herein.

The ink compositions have physical properties compatible with a wide range of ink ejecting conditions, i.e., driving voltages and pulse widths for thermal inkjet printing devices, driving frequencies of the piezo element for either a drop-on-demand device or a continuous device, and the shape and size of the nozzle.

### Evaluation of Printing Reliability

The inventive inks Y-5 and K-5 along with comparative ink CK-2 were tested on a Canon s520 printer with a thermal printhead (catalogue number QY6-0034-000). This drop-on-demand type multi-head performs the ink jet recording by imparting heat energy to the ink in the printhead to produce ink droplets (ejection orifice diameter: 17 micron; drive voltage: 19 V; 0.2 mJ/pL droplet)The printhead accommodates four colors: cyan, magenta, yellow and black. The color ink channels have 270 nozzles/color with 600 dpi resolution. The black has 160 nozzles with 300 dpi resolution.

The reliability of these inks was measured based on the number of copies/pages that could be printed of a 300 dpi flat-field target (8.25 inches x 10.85 inches) in the Y color channel. Each individual ink was delivered in a separate test to the Y channel via a bulk feed system from 125 milliliter bottles directly piped to the ink inlet screens of the printhead. This system eliminated the need for replacing individual cartridges. There were no sponges in the ink delivery system. Prints were made using Corel Draw 10.0 software in the RGB mode. The printer settings for the s520 prints were Media Type = Transparency, Print Quality = Standard, Color Adjustment = Manual, Print Type = None. Each page took an average of three minutes per page to print. A nozzle check was printed at the beginning of each test and again after each 100 pages/copies of the target described above. Clogged nozzles were determined by inspection of the nozzle checks and subsequent targets. A nozzle check target is one in which each nozzle on the head is fired and printed out on a distinctive location on the print. Evaluation of this target shows which nozzles are firing at the time the target is printed. Closer inspection of the target can yield dot placement information. Evidence of the missing nozzles was also obvious from a decrease in the density of the printed targets on plain paper. The same flat-field, monochrome target was printed until the majority of nozzles would not print, and the nozzle outs were not recoverable after two to three consecutive cleans. The test was discontinued at this point and the total number of printed pages was recorded as a measure of the printing reliability.

### Determination of % T1/T4

Each of the inks described above was subjected to a filtering test in order to determine %T1/T4. The filterability of the ink was determined by measuring the time it takes to pass four-100 mL aliquots of the same ink through a single filter and taking the ratio of the time it takes the first aliquot to completely pass through the membrane (T1) to the time it takes for the fourth and final 100-mL aliquot of the ink to pass through the same membrane (T4). At the start of each test, the ink was divided into four 100-mL aliquots. The first 100 mL aliquot of the ink was filtered through a pre-wetted 1 micron Whatman® polycarbonate membrane filter having a diameter of 47 mm (catalogue #111110 from Whatman Ltd.) at a constant pressure of 65 kPa (20 in of Hg). The filtrate obtained was defined as the first filtrate, and the corresponding filtering time, T1, was determined by measuring the time required for the aliquot of ink to filter completely through the membrane.

The second aliquot was filtered using the same membrane and conditions as for T1, and the filtrate obtained was defined as the second filtrate. The second filtering time, T2, was determined in the same manner by measuring the time required for the second aliquot to filter completely through the membrane. The third 100-mL aliquot was filtered through the membrane the same as the first and second aliquots to give a third filtrate and a third filtering time, T3. Finally, the fourth aliquot was filtered the same as the first, second and third aliquots to yield a fourth filtrate and a fourth filtering time, T4. The percentage T1/T4 (%) was calculated for each ink.

The total amount of ink that passed through the filter for a successfully completed test is 400 mL. If the filter plugged completed before the total 400 mL of ink passed through, then the amount of ink that passed prior to plugging is reported. In this case, the filterability test is unsuccessful, and the ratio of T1/T4 (%) is not reported because all four aliquots of ink did not pass through the filter membrane.

### Ink Performance

Each of the inventive and comparative inks was prepared as described. The percentage T1/T4 for each ink is shown in Table 1 along with the jetting performance. The following observations compare the examples summarized in Table 1. The results show that the pigmented ink samples prepared for the inventive cyan, magenta, yellow and black inks show superior jetting performance relative to the comparative examples of the same inks filtered to different levels. The jetting performance was at least 10 hours or longer with the exception of the inventive inks C-2 and Y-2 which jetted continuously for at least two hours before running out of the inventive ink. This performance meant that all 15 of the test nozzles fired continuously in a straight projectile for the duration of the test. For the inventive inks, this superior jetting performance was obtained for inks that had a ratio of percent T1/T4 of 80 or greater. The inks with a percent T1/T4 of 90 or greater performed the best. For these inventive inks, they exhibited continuous firing throughout the entire duration of the test. In addition, the nozzle plate of the piezo printhead was clean and devoid of ink droplets or stray satellites at the end of the testing period. This observation was made based on images of the nozzle plate and droplet firing throughout the test as well as after the test was completed.

The printing reliability for several of the inventive inks was also evaluated on a thermal printhead as described in Table 2. For these inks, superior performance was observed for inks that printed an excess of 600 pages or more based on the described reliability test. Preferably, the inks would print reliably for 800 pages or more, showing added printhead lifetime and enhanced performance and image quality for the prints.

**Table 1**

| **Ink** | **Amount Filtered (mL)¹** | **T1** | **T4** | **% T1/T4** | **TimeJetted²** |
|---|---|---|---|---|---|
| **C-1** | 400 | 9.05 | 9.20 | 98.4 | 48 h |
| **C-2** | 400 | 9.82 | 10.02 | 98.0 | >2 h³ |
| **C-3** | 400 | 8.88 | 9.08 | 97.9 | 48 h |
| **C-4** | 400 | 15.06 | 16.84 | 89.4 | 48 h |
| **C-5** | 400 | 8.48 | 8.92 | 97.1 | 48 h |
| **C-6** | 400 | 9.29 | 9.41 | 98.3 | 48 h |
| **Y-1** | 400 | 7.63 | 7.99 | 95.5 | >2 h³ |
| **Y-2** | 400 | 11.12 | 13.84 | 80.2 | 48 h |
| **Y-3** | 400 | 9.81 | 1.73 | 83.6 | 48 h |
| **Y-4** | 400 | 10.14 | 12.05 | 84.2 | 48 h |
| **M-1** | 400 | 8.60 | 8.79 | 97.8 | >45 h³ |
| **M-2** | 400 | 10.17 | 10.31 | 98.6 | 48 h |
| **M-3** | 400 | 9.85 | 10.18 | 96.8 | 48 h |
| **M-4** | 400 | 8.16 | 8.39 | 97.3 | 48 h |
| **M-5** | 400 | 9.50 | 9.64 | 98.5 | 48 h |
| **M-6** | 400 | 9.2 | 9.42 | 97.6 | 48 h |
| **M-7** | 400 | 9.05 | 9.59 | 94.4 | 18 h³ |
| **M-8** | 400 | 7.41 | 7.38 | 100.4 | 22 h³ |
| **K-1** | 400 | 10.14 | 10.65 | 95.2 | 48 h |
| **K-2** | 400 | 10.70 | 10.84 | 98.7 | 48 h |
| **K-3** | 400 | 10.05 | 10.50 | 95.7 | 48 h |
| **K-4** | 400 | 8.71 | 8.95 | 97.3 | 48 h |
| **CC-1** | 11 | -- | -- | -- | < 10 |
| **CC-2** | 400 | 9.34 | 13.9 | 67.2 | 15 min |
| **CC-3** | 23 | -- | -- | -- | 2 min |
| **CC-4** | 76 | -- | -- | -- | 5 min |
| **CY-1** | 3 | -- | -- | -- | 30 min |
| **CY-2** | 400 | 9.50 | 12.80 | 74.2 | 11 h |
| **CY-3** | 119 | -- | -- | -- | 3 h |
| **CY-4** | 17 | -- | -- | -- | 18 min |
| **CM-1** | 400 | 8.85 | 12.27 | 72.1 | 33 min |
| **CM-2** | 400 | 9.15 | 11.6 | 78.9 | < 3 min |
| **CM-3** | 400 | 8.22 | 10.71 | 76.8 | < 7 min |
| **CK-1** | 137 | -- | -- | -- | 17, 34 min |

| | | | | | |
|---|---|---|---|---|---|
| ¹ Total amount of ink that passed through the test filter. For successful completion of the test, the value reported is 400 mL. ² Total time the ink was jetted out of the inkjet printhead. The test was stopped after 48 hours of continuous jetting. ³ Ran out of ink. Continuous jetting throughout the stated time. | | | | | |

**Table 2**

| | | | | | |
|---|---|---|---|---|---|
| | **Amount Filtered (mL)** | **T1** | **T4** | **% T1/T4** | **pages Printed** |
| **Y-5** | 400 | 7.32 | 8.32 | 87.98 | 800 printed pages |
| **K-5** | 400 | 8.45 | 8.4 | 100.6 | 929 printed pages |
| **CK-2** | 7.5 | -- | -- | -- | 339 printed pages |

## Claims

1. A pigment-based ink composition for inkjet printing the ink composition comprising pigment particles, wherein said ink composition has been filtered through a 0.45 µm or smaller pore size depth filter to provide a filterability of at least 80% wherein filterability is determined by the following test; a sample of said pigment-based ink is divided into four 100 ml aliquots and a first aliquot is filtered through a chemically inert membrane having a porosity of 1.0 µm and a diameter of 47 mm and using a vacuum of 65 kPa (20 inches of Hg) and measuring the time it takes to complete the filtration, T1, a second and third aliquot are sequentially passed through the same filter under the same filtering conditions, the fourth aliquot is then passed through the same filter under the same conditions while measuring the time it takes to complete the filtration of the fourth aliquot, T4, the time of T1 is divided by T4 and multiplied by 100 to obtain the filterability.

2. The pigment-based ink of claim 1 wherein said filterability is greater than 90%.

3. The pigment-based ink of claim 1 or 2 wherein the pigment particles comprise yellow pigment.

4. The pigment-based ink composition of claim 1 or 2 wherein the pigment particles comprise magenta pigment.

5. The pigment-based ink composition of any of claims 1-4 wherein said pigment particles comprise organic crystalline pigments.

6. The pigment-based ink composition of any of claims 1, 2 and 5 wherein the pigment particles comprise cyan pigment.

7. The pigment-based ink composition of any of claims 1-6 wherein the mean particle size of said pigment particles is less than or equal to 0.3 micrometers.

8. The pigment-based ink composition of any of claims 1-7 wherein said ink composition further comprises water.

9. The pigment-based ink composition of claim 8 wherein said ink composition further comprises from 5 to 60 wt.% of one or more water miscible humectants.

10. The pigment-based ink of any of claims 1-9 wherein said pigment is present in an amount of between 0.5% and 6 % by weight of said ink.

## Patentansprüche

1. Tintenzusammensetzung auf Pigmentbasis zum Tintenstrahldrucken, wobei die Tintenzusammensetzung Pigmentteilchen aufweist, worin die Tintenzusammensetzung durch ein Tiefenfilter mit einer Porengröße von höchstens 0,45 µm gefiltert wird, um eine Filtrierbarkeit von mindestens 80% zu erzielen, wobei die Filtrierbarkeit durch folgenden Test bestimmt wird: eine Probe der Tinte auf Pigmentbasis wird in vier Teilmengen zu jeweils 100 ml aufgeteilt und eine erste Teilmenge wird durch eine chemisch inerte Membrane mit einer Porosität von 1,0 µm und einem Durchmesser von 47 mm unter Verwendung eines Vakuums von 65 kPa (508 mmHg) gefiltert und es wird die Zeit T1 bis zum Ende des Filtriervorgangs gemessen, dann werden eine zweite und dritte Teilmenge nacheinander unter den gleichen Filtrierungsbedingungen durch das gleiche Filter gelassen und die vierte Teilmenge wird unter den gleichen Bedingungen durch das gleiche Filter gelassen, und während die Zeit T4 gemessen wird, die es dauert, bis die Filtrierung der vierten Teilmenge beendet ist, wird die Zeit T1 durch die Zeit T4 geteilt und mit 100 multipliziert, um die Filtrierbarkeit zu erhalten.

2. Tintenzusammensetzung auf Pigmentbasis nach Anspruch 1, worin die Filtrierbarkeit größer ist als 90%.

3. Tintenzusammensetzung auf Pigmentbasis nach Anspruch 1 oder 2, worin die Pigmentteilchen gelbe Pigmente aufweisen.

4. Tintenzusammensetzung auf Pigmentbasis nach Anspruch 1 oder 2, worin die Pigmentteilchen magentafarbene Pigmente aufweisen.

5. Tintenzusammensetzung auf Pigmentbasis nach einem der Ansprüche 1 bis 4, worin die Pigmentteilchen organische kristalline Pigmente aufweisen.

6. Tintenzusammensetzung auf Pigmentbasis nach einem der Ansprüche 1, 2 und 5, worin die Pigmentteilchen cyanfarbene Pigmente aufweisen.

7. Tintenzusammensetzung auf Pigmentbasis nach einem der Ansprüche 1 bis 6, worin die mittlere Teilchengröße der Pigmentteilchen kleiner ist als oder gleich groß ist wie 0,3 µm.

8. Tintenzusammensetzung auf Pigmentbasis nach einem der Ansprüche 1 bis 7, worin die Tintenzusammensetzung zudem Wasser aufweist.

9. Tintenzusammensetzung auf Pigmentbasis nach Anspruch 8, worin die Tintenzusammensetzung 5 bis 60 Gewichtsprozent eines oder mehrerer mit Wasser mischbarer Feuchthaltemittel aufweist.

10. Tintenzusammensetzung auf Pigmentbasis nach einem der Ansprüche 1 bis 9, worin das Pigment in einer Menge von 0,5 bis 6 Gewichtsprozent der Tinte vorliegt.

## Revendications

1. Composition d'encre à base de pigments destinée à l'impression par jets d'encre de la composition d'encre comprenant des particules de pigments, où ladite composition d'encre a été filtrée au travers d'un filtre en profondeur à taille de pores inférieure ou égale à 0,45 µm afin de fournir une filtrabilité d'au moins 80 %, où la filtrabilité est déterminée par le test suivant, un échantillon de ladite encre à base de pigments est divisé en quatre aliquotes de 100 ml et une première aliquote est filtrée au travers d'une membrane chimiquement inerte ayant une porosité de 1,0 µm et un diamètre de 47 mm et en utilisant un vide de 65 kPa (20 pouces de Hg) et en mesurant le temps écoulé pour achever la filtration, T1, une deuxième et une troisième aliquotes sont séquentiellement passées au travers du même filtre sous les mêmes conditions de filtration, la quatrième aliquote est alors passée à travers le même filtre sous les mêmes conditions, tout en mesurant le temps écoulé pour achever la filtration de la quatrième aliquote, T4, le temps T1 est divisé par T4 et multiplié par 100 afin d'obtenir la filtrabilité.

2. Encre à base de pigments selon la revendication 1, dans laquelle ladite filtrabilité est supérieure à 90 %.

3. Encre à base de pigments selon la revendication 1 ou 2, dans laquelle les particules de pigments comprennent un pigment jaune.

4. Composition d'encre à base de pigments selon la revendication 1 ou 2, dans laquelle les particules de pigments comprennent un pigment magenta.

5. Composition d'encre à base de pigments selon l'une quelconque des revendications 1 à 4, dans laquelle lesdites particules de pigments comprennent des pigments cristallins organiques.

6. Composition d'encre à base de pigments selon l'une quelconque des revendications 1, 2 et 5, dans laquelle les particules de pigments comprennent un pigment cyan.

7. Composition d'encre à base de pigments selon l'une quelconque des revendications 1 à 6, dans laquelle la taille de particules moyenne desdites particules de pigments est inférieure ou égale à 0,3 micromètre.

8. Composition d'encre à base de pigments selon l'une quelconque des revendications 1 à 7, où ladite composition d'encre comprend en outre de l'eau.

9. Composition d'encre à base de pigments selon la revendication 8, où ladite composition d'encre comprend en outre de 5 à 60 % en poids de un ou plusieurs agents d'humidification miscibles dans l'eau.

10. Encre à base de pigments selon l'une quelconque des revendications 1 à 9, dans laquelle ledit pigment est présent suivant une proportion comprise entre 0,5 % et 6 % en poids de ladite encre.
